# EUROPÄISCHE PATENTSCHRIFT

(11) **EP 1 403 990 B1**
(45) Veröffentlichungstag und Bekanntmachung des Hinweises auf die Patenterteilung: **26.04.2006**
(21) Anmeldenummer: 03019318.9
(22) Anmeldetag: 27.08.2003
(51) Int. Cl.: H02G 3/08

(54) **Elektrische Installationseinrichtung**
Electrical installation device
Equipement d'installation électrique

(30) Priorität: 26.09.2002 DE 20214862 U
(43) Veröffentlichungstag der Anmeldung: 31.03.2004
(73) Patentinhaber: ABB PATENT GmbH, 68526 Ladenburg (DE)
(72) Erfinder: Pfeifer, Theo, Dipl.-Ing. (FH), 77876 Kappelrodeck (DE)
(74) Vertreter: Miller, Toivo

(56) Entgegenhaltungen:
- EP-A- 0 448 545
- FR-A- 2 212 664
- GB-A- 2 307 115

## Beschreibung

Die Erfindung betrifft eine Installationseinrichtung gemäß dem Oberbegriff des Anspruches 1.

An einem Installationsverteiler beziehungsweise an ein Installationsverteilergehäuse ist häufig ein Einspeisegehäuse befestigt, über das dem Installationsverteiler elektrische Energie zugeführt wird. Zur Einspeisung dienen Kabel oder Sammelschienen, die in das Einspeisegehäuse eingeführt sind.

Im Inneren des Einspeisegehäuses befinden sich Kabelklemmen, Sammelschienenhalter oder eine Profiltragschiene, wobei auch Mittel vorgesehen sind, an denen eine Kabelklemme geführt oder befestigt wird. In bestimmten Installationen ist eine NH-Sicherung eingesetzt; anstatt einer solchen NH-Sicherung kann auch ein Hauptleitungsschutzschalter eingesetzt werden.

Zur Befestigung des Einspeisegehäuses am Installationsverteiler besitzt das Einspeisegehäuse bei bekannten Einrichtungen am Unterteil einen Haken, der in einen Flanschausbruch am Installationsverteiler einhakt. Am Oberteil des Einspeisegehäuses befindet sich ein Steg, damit das Einspeisegehäuse mit geringem Spiel den Flanschausbruch des Installationsgerätes ausfüllt, wobei das Einspeisegehäuse zusätzlich mittels Schrauben mit dem Installationsverteiler verbunden wird.

Aus der FR 22 12 664 A1 ist eine Installationseinrichtung bekannt geworden, bei der eine Platte vorgesehen ist, die taschenförmige Ausnehmungen aufweist, in welche zusätzliche Installationsgeräte einschiebbar und darin verrastbar sind.

Aufgabe der Erfindung ist es, eine Installationseinrichtung der eingangs genannten Art so auszubilden, daß die Montage des Einspeisegehäuses erheblich vereinfacht ist.

Diese Aufgabe wird erfindungsgemäß durch die Merkmale des Anspruches 1 gelöst.

Danach kann am Installationsverteilergehäuse ein Flanschteil angebracht sein, an dem das Einspeisegehäuse verrastend befestigbar ist. Zu diesem Zweck besitzt das Einspeisegehäuse an einer Seitenwandung eine Ausnehmung, mit der das Einspeisegehäuse über einen daran angepassten ringartigen Vorsprung schiebbar und daran verrastbar ist. Dabei befinden sich an sich gegenüberliegenden Ringwandabschnitten durch Schlitze gebildete Federarme mit Rastelementen, die mit an der Ausnehmung angeordneten Rastelementen zur Verrastung beim Übereinanderschieben zusammenwirken.

An den anderen Seitenwandungen des Einspeisegehäuses, das aus einem Unter- und Oberteil bestehen kann, sind ausbrechbare Wandabschnitte vorgesehen, in die nach Ausbrechen Kabeleinführungselemente einsetzbar sind.

Der Flanschteil ist am Installationsverteilergehäuse durch Verrastung ebenfalls lösbar fixiert.

Weitere vorteilhafte Ausgestaltungen und Verbesserungen der Erfindung sind den weiteren Unteransprüchen zu entnehmen.

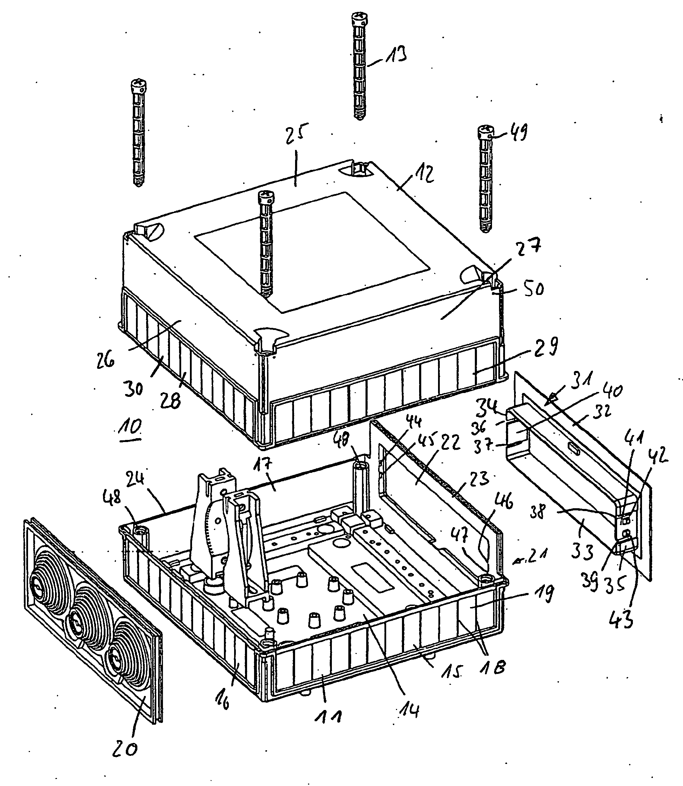

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile näher erläutert und beschrieben werden.

Es zeigt:
- einzige Fig.: Ein Einspeisegehäuse in Explosionsdarstellung.

Ein Einspeisegehäuse 10 besitzt ein Gehäuseunterteil 11 und ein Gehäuseoberteil 12, die beide mittels vier Schrauben 13 miteinander verbunden werden.

Das Gehäuseunterteil 11 umfasst einen Boden 14 und drei Seitenwände 15 bis 17, die durch Schwächungen 18 ausbrechbare Wandbereiche 19 aufweisen. In dadurch gebildete Öffnungen kann eine Kabeleinführungsvorrichtung eingesetzt werden, durch die hindurch ein Speisekabel in das Einspeisegehäuse einführbar sind.

In der vierten Wand 21 ist eine Ausnehmung 22 durch einen Rahmen 23 gebildet, der am Gehäuseunterteil 11 angeformt ist und der die freien Kanten der übrigen Seitenwände 15 bis 17 senkrecht zur Ebene des Bodens 14 überragt.

Das Gehäuseoberteil besitzt einen oberen Boden 25 sowie Seitenwände 26, 27, die einen Teilabschnitt 28, 29 aufweisen, der ausbrechbare Wandteile 30 umfasst; wenn diese Wandteile 30 zusammen mit den entsprechenden Wandteilen 19 aus den direkt übereinander liegenden Seitenwänden des Gehäuseunterteils 11 und des Gehäuseoberteils 12 ausgebrochen sind, dann wird die Öffnung gebildet, in die die Kabeleinführungseinrichtung eingesetzt werden kann.

Auf der der Seitenwand 26 entgegengesetzten Seite ist in der dort vorhandenen, hier nicht sichtbaren Seitenwand eine Aussparung vorgesehen, deren Abmessungen den Abmessungen des Rahmens 23 entspricht, so dass nach Aufsetzen des Gehäuseoberteils 12 die freie Kante des Rahmens 23 des Gehäuseunterteils 11 die freie und lichte Innenkante der Aussparung berührt, da der Rahmen genau in diese Aussparung (nicht gezeigt) hinein passt.

An einem nicht näher dargestellten Installationsverteilergehäuse ist eine Ausnehmung vorgesehen, in die ein Flanschteil 31 eingesetzt ist, welches einen rechteckigen Flanschrahmen 32 aufweist, an dem senkrecht dazu ein ringförmiger, ebenfalls rechteckiger Vorsprung 33 angeformt ist; dieser ringförmige Vorsprung ist so bemessen, dass er genau in die Ausnehmung 22 hinein passt.

Die sich gegenüberliegenden Schmalseitenwände 34 und 35 des ringförmigen Vorsprunges oder ringförmigen Kragens weisen Schlitze 36, 37; 38, 39 auf, zwischen denen federnde Zungen 40 und 41 gebildet sind, auf deren Außenseite Rastnasen 42, 43 angeformt sind, die mit entsprechenden Rastvorsprüngen 44, 45 an den kurzen Innenkanten des Rahmens 23 angeformt sind.

Die Rastnasen 42 und 43 an der federnden Zunge 41 sind sichtbar, wogegen die entsprechenden Rastnasen an der Zunge 40 nicht sichtbar sind. Die der Seitenkante mit den Rastnasen 44 und 45 entgegengesetzt oder gegenüberliegenden Schmalseitenkante der Ausnehmung 22 trägt ebenso Rastnasen 46, 47.

Die Montage dieser Anordnung wird wie folgt durchgeführt:
Zunächst wird das Flanschteil 23 an das Installationsverteilergehäuse angesetzt, wobei der ringförmige Vorsprung durch die am Installationsverteilergehäuse vorgesehene Ausnehmung, die etwa der Ausnehmung 22 in ihren Abmessungen entspricht, hindurch gesteckt wird. Sodann wird das geschlossene Einspeisegehäuse 10 so aufgesteckt, dass die Ausnehmung 22 über den Vorsprung 33 gleitet, wobei die Rastvorsprünge 44, 45; 46, 47 hinter die entsprechenden Rastnasen 42, 43 greifen können. Auf diese Weise ist das Einspeisegehäuse am Installationsverteilergehäuse fixiert.

Zur weiteren Fixierung kann das Einspeisegehäuse 10 an einer Wand befestigt werden, wobei je nach Abstand des Bodens 14 zu dieser Wand Distanzelemente vorgesehen sein können. Es ist noch zu erwähnen, dass die Wand, die hier die Zeichenebene bildet, eine senkrecht verlaufende Rauminnenwand ist.

Die Schrauben 13, die in Gewindelöcher 48 am Gehäuseunterteil eingeschraubt werden, besitzen ebenso wie das Gehäuseoberteil Plombieröffnungen 49, 50, durch die hindurch nach dem Verbinden des Gehäuseunterteils mit dem Gehäuseoberteil ein Plombierdraht hindurchgezogen werden kann.

Das Flanschteil 31 ist lösbar am Installationsverteiler zu befestigen, was hier nicht näher dargestellt ist. Der Flanschrahmen 32 hat dabei den weiteren Vorteil, dass er die Ausnehmung im Installationsverteilergehäuse weiträumig überdeckt, so dass bei eventuellen Beschädigungen dieser Ausnehmung am Installationsgehäuse, dass heißt der Innenkanten, eine ausreichende Isolierung nach wie vor noch gewährleistet ist.

Da an insgesamt den drei Seitenwänden 15 bis 17 beziehungsweise 27 und 26 die ausbrechbaren Wandabschnitte vorgesehen sind, kann die Kabeleinführungseinrichtung 20 an eben diesen drei Wänden fixiert werden.

Nachzutragen ist, dass das Flanschteil 31 von der Innenseite des Installationsverteilergehäuses durch die dort befindliche Ausnehmung hindurch gesteckt wird. Damit ist der Flanschrahmen 32 gleichzeitig Teil der Innenwandung beziehungsweise bildet einen Teil der Innenfläche.

Auf der Bodenfläche 14 innerhalb des Gehäuseunterteiles befinden sich einige Vorsprünge und dergleichen, auf denen elektrische Komponenten befestigt werden können, die für das Einspeisegehäuse erforderlich sind.

## Patentansprüche

1. Installationseinrichtung mit einem Installationsverteilergehäuse an dem ein Einspeisegehäuse fixierbar ist, **dadurch gekennzeichnet, dass** an einer Seitenwandung (21) des Einspeisegehäuses (10) eine Ausnehmung (22) vorgesehen ist, mit der das Einspeisegehäuse (10) über einen an einem Flanschteil (31) am Instanationsverteilergehäuse angeformten, an die Ausnehmung (22) angepassten ringartigen Vorsprung (33) schiebbar und daran verrastbar ist.

2. Installationseinrichtung, bei der das Einspeisegehäuse ein Gehäuseunterteil (11) und ein Gehäuseoberteil (12) aufweist, nach einem der vorigen Ansprüche, **dadurch gekennzeichnet, dass** an den anderen Seitenwandungen des Gehäuseunterteils (11) und des Gehäuseoberteils (12) ausbrechbare Wandabschnitte (19; 30) angebracht sind, in die nach Ausbrechen der Wandabschnitte Kabeleinführungselemente (20) einsetzbar sind.

3. Installationseinrichtung nach einem der vorigen Ansprüche, **dadurch gekennzeichnet, dass** an dem ringartigen Vorsprung (33) an sich gegenüberliegenden Ringwandabschnitten durch Schlitze (36, 37; 38, 39) gebildete Federarme (40, 41) mit Rastelementen (42, 43) vorgesehen sind, die mit an der Ausnehmung (22) angeordneten Rastelementen (44, 45; 46, 47) zur Verrastung zusammenwirken.

4. Installationseinrichtung nach einem der vorigen Ansprüche, **dadurch gekennzeichnet, dass** der Flanschteil (31) am Installationsverteilergehäuse durch Verrastung lösbar fixiert ist.

5. Installationsverteiler nach einem der vorigen Ansprüche, **dadurch gekennzeichnet, dass** am Gehäuseunterteil (11) ein die Ausnehmung (22) umgebender Rahmen (23) und am Gehäuseoberteil (12) eine daran angepasste Aussparung angeformt sind.

6. Installationseinrichtung nach einem der vorigen Ansprüche, **dadurch gekennzeichnet, dass** in einer Seitenwandung des Installationsverteilergehäuses eine Aufnahmeöffnung vorgesehen ist, durch die hindurch der Vorsprung (33) des Flanschteils (31) von der Innenseite des Installationsverteilergehäuses aus hindurchschiebbar ist, so dass der Flanschrand (32) des Flanschteils (31) einen Teil der Innenfläche der Seitenwandung des Installationsverteilergehäuses bildet.

7. Installationseinrichtung nach einem der vorigen Ansprüche, **dadurch gekennzeichnet, dass** an den Seitenwänden (27, 26) lediglich ein Teilbereich, ausgehend von den freien Kanten der Seitenwände (27, 26) mit den ausbrechbaren Wandabschnitten (30) versehen ist.

## Revendications

1. Equipement d'installation comportant un coffret de distribution d'installation auquel peut être fixé un coffret d'alimentation, **caractérisé par le fait qu'**il est prévu, dans une paroi latérale (21) du coffret d'alimentation (10), une découpe (22) grâce à laquelle le coffret d'alimentation (10) peut être enfilé puis encliqueté sur une partie en saillie (33) annulaire adaptée à la découpe (22), qui est aménagée sur un élément formant bride (31) du coffret de distribution d'installation.

2. Equipement d'installation, dans lequel le coffret d'alimentation comprend un élément de coffret inférieur (11) et un élément de coffret supérieur (12), selon la revendication précédente, **caractérisé par le fait que** dans les autres parois latérales de l'élément de coffret inférieur (11) et de l'élément de coffret supérieur (12) sont prévues des portions de paroi (19; 30) détachables, dans lesquelles des éléments d'entrée de câbles (20) peuvent être montés après retrait desdites portions détachables.

3. Equipement d'installation selon une des revendications précédentes, **caractérisé par le fait qu'**il est prévu sur la partie en saillie (33) annulaire, dans des portions de paroi annulaire en vis-à-vis, des pattes élastiques (40, 41) qui portent des éléments d'encliquetage (42, 43), sont définies par des entailles (36, 37; 38, 39), et coopèrent à des fins d'encliquetage avec des éléments d'encliquetage (44, 45; 46, 47) disposés dans la découpe (22).

4. Equipement d'installation selon une des revendications précédentes, **caractérisé par le fait que** l'élément formant bride (31) est fixé de manière démontable, par encliquetage, au coffret de distribution d'installation.

5. Equipement d'installation selon une des revendications précédentes, **caractérisé par le fait que** sur l'élément de coffret inférieur (11) est prévu un cadre venu de moulage qui entoure la découpe (22) et sur l'élément de coffret supérieur (12) est prévue une échancrure adaptée audit cadre.

6. Equipement d'installation selon une des revendications précédentes, **caractérisé par le fait qu'**il est prévu dans une paroi latérale du coffret de distribution d'installation, une ouverture de montage dans laquelle la partie en saillie (33) de l'élément formant bride (31) peut être glissée depuis l'intérieur du coffret de distribution d'installation, de telle sorte que le bord (32) de l'élément formant bride (31) forme une partie de la surface intérieure de la paroi latérale du coffret de distribution d'installation.

7. Equipement d'installation selon une des revendications précédentes, **caractérisé par le fait que** dans les parois latérales (27, 26) seule une zone partielle, qui s'étend à partir des bords libres des parois latérales (27, 26), est pourvue des portions de paroi (30) détachables.

## Claims

1. An installation device with a distribution board housing, to which a feeder housing can be fixed, **characterized in that** a recess (22) is provided on a side wall (21) of the feeder housing (10), with which the feeder housing (10) can be slid over an annular projection (33) which is formed on the distribution board housing and is adjusted to the recess (22), and can be latched onto the same.

2. An installation device in which the feeder housing comprises a bottom part (11) and an upper part (12), according to one of the preceding claims, **characterized in that** wall sections (19; 30) are attached to the other side walls of the bottom part (11) of the housing and the upper part (12) of the housing, which wall sections can be broken out, and into which cable introduction elements (20) can be inserted after the removal of the wall sections.

3. An installation device according to one of the preceding claims, **characterized in that** spring arms (40, 41) which are formed by slots (36, 37; 38, 39) and comprise latching elements (42, 43) are provided on the annular projection (33) on mutually opposite annular wall sections, which spring arms cooperate with latching elements (44, 45; 46, 47) arranged on the recess (22) for latching purposes.

4. An installation device according to one of the preceding claims, **characterized in that** the flange part (31) is detachably fixed to the distribution board housing by latching.

5. A distribution board according to one of the preceding claims, **characterized in that** a frame (23) which encloses the recess (22) is formed on the bottom part (11) of the housing and a recess which is adjusted thereto is formed on the upper part (12) of the housing.

6. An installation device according to one of the preceding claims, **characterized in that** a receiving opening is provided in a side wall of the distribution board housing through which the projection (33) of the flange part (31) can be pushed through from the inside of the distribution board housing, so that the flange edge (32) of the flange part (31) forms a part of the inside surface of the side wall of the distribution board housing.

7. An installation device according to one of the preceding claims, **characterized in that** merely a partial area on the side walls (27, 26), starting from the free edges of the side walls (27, 26), is provided with the wall sections (30) that can be broken out.
